# EUROPÄISCHE PATENTSCHRIFT

(11) **EP 2 617 563 B1**
(45) Veröffentlichungstag und Bekanntmachung des Hinweises auf die Patenterteilung: **10.09.2014**
(21) Anmeldenummer: 13151784.9
(22) Anmeldetag: 18.01.2013
(51) Int. Cl.: B32B 5/02, B32B 27/12, B32B 27/30, F16L 51/02

(54) **Weichstoff-Kompensator**
Fabric expansion joint
Compensateur souple

(30) Priorität: 20.01.2012 DE 202012000532 U
(43) Veröffentlichungstag der Anmeldung: 24.07.2013
(73) Patentinhaber: Korema GmbH & Co. KG, 64331 Weiterstadt (DE)
(72) Erfinder: Merz, Walther, 64331 Weiterstadt (DE)
(74) Vertreter: Schwan Schorer & Partner mbB

(56) Entgegenhaltungen:
- DE-A1- 3 820 922
- DE-A1- 4 410 413
- DE-A1- 19 639 393
- DE-U1- 20 320 534

## Beschreibung

Die Erfindung betrifft einen Weichstoffkompensator mit einem Festigkeitsträger und einer mit dem Festigkeitsträger verbundenen Sperrschicht.

Weichstoffkompensatoren dieser Art sind beispielsweise aus DE 44 10 413 C2 und DE 196 39 393 C2 bekannt. Solche Weichstoffkompensatoren werden in Rohrleitungssystemen benutzt, um durch Temperaturunterschiede hervorgerufene Längenänderungen aufzunehmen, um Rohrleitungselemente spannungsfrei anzuschließen, um die Übertragung von Schwingungen (zum Beispiel von Pumpen) und Geräuschen auf das Rohrleitungsnetz zu unterbinden, oder um allgemein Dehnungen, Quer- und Längsbewegungen sowie Schwingungen zwischen Bauelementen von Rohrleitungssystemen aufzunehmen. Die für Weichstoffkompensatoren eingesetzten Werkstoffe müssen insgesamt und vor allem in der Sperrschicht eine ungewöhnliche Kombination von sich teilweise widersprechenden Eigenschaften erfüllen. Wesentlich sind insbesondere chemische und thermische Beständigkeit in einem unter Umständen weiten Temperaturbereich, hervorragende Diffusions- und Permeationsfestigkeit bei statischer wie dynamischer Beaufschlagung, besonders hohe Flexibilität und gute Verarbeitbarkeit.

Ein Weichstoffkompensator hat zunächst den Austritt von Komponenten des in dem Rohrleitungssystem geführten Gutes in die Umgebung zu verhindern. Bei Anwendungen wie insbesondere in der Lebensmittel- und Pharmaindustrie muss der Weichstoffkompensator zudem ein Eindringen von produktschädigenden Stoffen, vor allem gesundheitsgefährdenden Stoffen, aus der Umgebung des Rohrleitungssystems in das den Weichstoffkompensator durchströmende Gut, beispielsweise Lebensmittel oder Pharmazeutika, verhindern.

Mit der vorliegenden Erfindung soll ein Weichstoffkompensator geschaffen werden, der zusätzliche Erfordernisse befriedigt. Insbesondere soll ein Weichstoffkompensator geschaffen werden, der eine besonders zweckmäßige Handhabung gewährleistet.

Ausgehend von einem Weichstoffkompensator der eingangs genannten Art wird diese Aufgabe erfindungsgemäß dadurch gelöst, dass der Festigkeitsträger ein Gitter-Drehergewebe aus Fasern aus natürlichen und/oder synthetischen Polymeren aufweist, und die Sperrschicht transluzent oder transparent ist.

Das Gitter-Drehergewebe bildet durchbrochene textile Flächen, so dass sich insgesamt ein Weichstoff-Kompensator ergibt, der je nach Beschaffenheit der Sperrschicht transluzent (durchscheinend) oder transparent (durchsichtig) ist, so dass das den Kompensator durchlaufende feste oder flüssige Gut von außen sichtbar ist.

Bevorzugte Ausgestaltungen der Erfindung ergeben sich aus den Unteransprüchen.

Insbesondere kann das Gitter-Drehergewebe Mineralfasern, Glasfasern, Polyesterfasern, Aramidfasern oder Gemische dieser Fasern aufweisen.

Vorzugsweise hat das Gitter-Drehergewebe eine Maschenweite von mindestens 3x3 mm, stärker bevorzugt von mindestens 5x5 mm, womit sich Festigkeitsträger realisieren lassen, die einerseits eine ausreichend hohe Festigkeit haben, und die andererseits für eine gute Beobachtbarkeit des den Kompensator durchlaufenden Guts sorgen.

Die mit dem Festigkeitsträger verbundene Sperrschicht weist vorzugsweise ein transluzentes oder transparentes Copolymerisat aus Ethylen und Vinylacetat auf, welches in Form einer Beschichtung auf den Festigkeitsträger aufgebracht sein kann, insbesondere mittels Vulkanisieren.

Um die Sicherheit des Kompensators gegenüber Undichtigkeiten noch weiter zu erhöhen, kann sowohl auf der Innen- als auch auf der Außenseite des Festigkeitsträgers je eine Sperrschicht vorgesehen sein.

Die als Sperrschicht dienende Beschichtung hat vorzugsweise eine Dicke im Bereich von 0,5 bis 2,0 mm, und insbesondere im Bereich von 0,7 bis 1,5 mm.

Der Festigkeitsträger und die Sperrschicht bzw. die Sperrschichten des Kompensators sind zweckmäßig miteinander verklebt oder verschweißt.

Bei einem Einsatz des Weichstoff-Kompensators in der Lebensmittel- oder Pharmaindustrie sind sämtliche Kompensator-Bestandteile so ausgewählt, dass sie alle Anforderungen der einschlägigen Rechtsvorschriften erfüllen, und insbesondere für Lebensmittel geeignet gemäß EG-Norm 2002/72 ausgeführt sind.

Des Weiteren sind bei einem Einsatz des Weichstoff-Kompensators in der Lebensmittel- oder Pharmaindustrie sämtliche Kompensator-Bestandteile vorzugsweise so ausgeführt, dass der Kompensator druckfest gemäß EG-Norm 97/23 ist.

Ausführungsbeispiele der Erfindung werden nachstehend anhand der beiliegenden Zeichnungen näher erläutert. Es zeigen:
- Fig. 1: einen vergrößerten, nicht maßstabsgerechten, schematischen Querschnitt eines zur Herstellung eines erfindungsgemäßen Weichstoffkompensators verwendeten Verbundwerkstoffes; und
- Fig. 2: eine weitere Ausführungsform eines zur Herstellung eines erfindungsgemäßen Weichstoffkompensators verwendeten Verbundwerkstoffes.

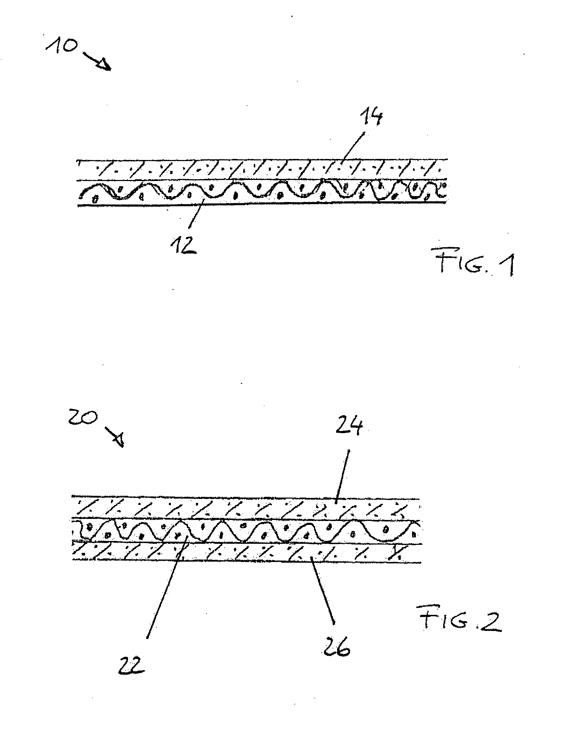

Der in Fig. 1 gezeigte Verbundwerkstoff 10 zur Herstellung eines erfindungsgemäßen Weichstoffkompensators weist einen Festigkeitsträger 12 auf, der ein Gitter-Drehergewebe beispielsweise aus Mineralfasern sowie eine Sperrschicht 14 aufweist. Bei dem Gitter-Drehergewebe des Festigkeitsträgers 12 handelt es sich um ein Gewebe, bei dem eine Grundkette derart von einer Dreherkette umschlugen ist, dass dort, wo sonst die Kettfäden verlaufen, Lücken entstehen und somit ein netz- oder gitterartiges Gewebe mit durchbrochenen textilen Flächen entsteht. Bei dem gezeigten Ausführungsbeispiel besteht die Sperrschicht 14 des Festigkeitsträgers 12 aus einer transparenten Beschichtung eines Copolymerisats aus Ethylen und Vinylacetat, die auf den Festigkeitsträger 12 aufgebracht und mit diesem, beispielsweise mittels chemischem Vernetzens, insbesondere Vulkanisierens, verbunden ist.

Ein aus dem Verbundwerkstoff 10 hergestellter Weichstoffkompensator ist üblicherweise so aufgebaut, dass die Sperrschicht 14 an der Innenseite des Kompensators vorgesehen ist. Je nach Art der Anwendung kann die Sperrschicht 14 jedoch auch die Außenseite des Kompensators bilden.

In Fig. 2 ist ein Verbundwerkstoff 20 zur Herstellung eines erfindungsgemäßen Weichstoffkompensators veranschaulicht, der sich von dem Verbundwerkstoff 10 aus Fig. 1 dadurch unterscheidet, dass hier der Festigkeitsträger 22 beidseitig mit einer transparenten oder transluzenten Sperrschicht versehen ist, wobei die Sperrschichten 24 und 26 aus demselben Werkstoff oder aber aus unterschiedlichen Werkstoffen gefertigt sein können.

Für Anwendungen in der Lebensmittel- und Pharmaindustrie wird durch entsprechende Materialauswahl und -verarbeitung sichergestellt, dass alle Anforderungen der einschlägigen Rechtsvorschriften, wie beispielsweise die der entsprechenden US-FDA-Normen bzw. der jeweiligen EU-Richtlinien erfüllt sind, wie insbesondere die der EG-Norm 2002/72 sowie der EG-Norm 97/23.

## Patentansprüche

1. Weichstoff-Kompensator mit einem Festigkeitsträger (12; 22), der ein Gitter-Drehergewebe aus Fasern aus Mineralfasern oder aus natürlichen und/oder synthetischen Polymeren aufweist, sowie einer mit dem Festigkeitsträger verbundenen transluzenten oder transparenten Sperrschicht (14; 24, 26).

2. Weichstoff-Kompensator nach Anspruch 1, **dadurch gekennzeichnet, dass** das Gitter-Drehergewebe Mineralfasern, Glasfasern, Polyesterfasern und/oder Aramidfasern aufweist.

3. Weichstoff-Kompensator nach Anspruch 1 oder 2, **dadurch gekennzeichnet, dass** das Gitter-Drehergewebe eine Maschenweite von mindestens 3x3 mm aufweist,

4. Weichstoff-Kompensator nach Anspruch 3 **dadurch gekennzeichnet, dass** das Gitter-Drehergewebe eine Maschenweite von mindestens 5x5 mm aufweist.

5. Weichstoff-Kompensator nach einem der vorhergehenden Ansprüchen **dadurch gekennzeichnet, dass** die Sperrschicht (14; 24, 26) ein transluzentes oder transparentes Copolymerisat aus Ethylen und Vinylacetat aufweist.

6. Weichstoff-Kompensator nach Anspruch 5 **dadurch gekennzeichnet, dass** die Sperrschicht (14; 24, 26) als eine Beschichtung auf den Festigkeitsträger (12; 22) aufgebracht ist.

7. Weichstoff-Kompensator nach Anspruch 6 **dadurch gekennzeichnet, dass** die Beschichtung auf den Festigkeitsträger (12; 22) vulkanisiert ist

8. Weichstoff-Kompensator nach Anspruch 6 oder 7, **dadurch gekennzeichnet, dass** die Beschichtung eine Dicke im Bereich von 0,5 bis 2,0 mm, vorzugsweise von 0,7 bis 1,5 mm hat.

9. Weichstoff-Kompensator nach einem der vorhergehenden Ansprüchen **dadurch gekennzeichnet, dass** sowohl auf der Innen- als auch auf der Außenseite des Festigkeitsträgers (12; 22) eine Sperrschicht (14; 24, 26) vorgesehen ist.

10. Weichstoff-Kompensator nach einem der vorhergehenden Ansprüche, **dadurch gekennzeichnet, dass** der Festigkeitsträger (12; 22) und die Sperrschicht(en) (14; 24, 26) miteinander verklebt oder verschweißt sind.

11. Weichstoff-Kompensator nach einem der vorgehenden Ansprüche für die Lebensmittel- oder Pharmaindustrie, **dadurch gekennzeichnet, dass** der Kompensator für Lebensmittel geeignet gemäß EG-Norm 2002/72 ausgeführt ist.

12. Weichstoff-Kompensator nach einem der vorhergehenden Ansprüche für die Lebensmittel- oder Pharmaindustrie, **dadurch gekennzeichnet, dass** der Kompensator druckfest gemäß EG-Norm 97/23 ausgeführt ist.

## Claims

1. Soft material compensator having a stability support (12; 22) comprising a mesh leno fabric of fibers of mineral fibers or of natural and/or synthetic polymers, and a translucent or transparent barrier layer (14; 24, 26) connected to the stability support.

2. Soft material compensator according to claim 1, **characterized by** the mesh leno fabric comprising mineral fibers, glass fibers, polyester fibers and/or aramide fibers.

3. Soft material compensator according to claim 1 or 2, **characterized by** the mesh leno fabric having a mesh width of at least 3x3 mm.

4. Soft material compensator according to claim 3, **characterized by** the mesh leno fabric having a mesh width of at least 5x5 mm.

5. Soft material compensator according to any one of the preceding claims, **characterized by** the barrier layer (14; 24, 26) comprising a translucent or transparent copolymer of ethylene and vinyl acetate.

6. Soft material compensator according to claim 5, **characterized by** the barrier layer (14; 24, 26) being applied onto the stability support (12; 22) as a coating.

7. Soft material compensator according to claim 6, **characterized by** the coating being vulcanized onto the stability support (12; 22).

8. Soft material compensator according to claim 6 or 7, **characterized by** the coating having a thickness in the range of from 0,5 to 2,0 mm, preferably of from 0,7 to 1,5 mm.

9. Soft material compensator according to any one of the preceding claims, **characterized in that** a barrier layer (14; 24, 26) is provided both on the inner side and on the outer side of the stability support (12; 22).

10. Soft material compensator according to any one of the preceding claims, **characterized by** the stability support (12; 22) and the barrier layer(s) (14; 24, 26) being glued or fused to each other.

11. Soft material compensator according to any one of the preceding claims for use in the food industry or the pharmaceutical industry, **characterized by** the compensator being configured in conformity with EU standard 2002/72.

12. Soft material compensator according to any one of the preceding claims for use in the food industry or the pharmaceutical industry, **characterized by** the compensator being configured pressure resistant in conformity with EU standard 97/23.

## Revendications

1. Compensateur en matière souple avec un support de résistance (12 ; 22) présentant un tissu à point de gaze en treillis qui est constitué de fibres composées de fibres minérales ou de polymères naturels et/ou synthétiques, ainsi qu'une couche de barrière (14 ; 24, 26) translucide ou transparente, raccordée au support de résistance.

2. Compensateur en matière souple selon la revendication 1, **caractérisé en ce que** le tissu à point de gaze en treillis comprend des fibres minérales, des fibres de verre, des fibres polyester et/ou des fibres d'aramide.

3. Compensateur en matière souple selon la revendication 1 ou 2, **caractérisé en ce que** le tissu à point de gaze en treillis présente une largeur de maille de 3 x 3 mm au moins.

4. Compensateur en matière souple selon la revendication 3, **caractérisé en ce que** le tissu à point de gaze en treillis présente une largeur de maille de 5 x 5 mm au moins.

5. Compensateur en matière souple selon l'une des revendications précédentes, **caractérisé en ce que** la couche de barrière (14 ; 24, 26) comprend un copolymérisat d'éthylène et d'acétate de vinyle translucide ou transparent.

6. Compensateur en matière souple selon la revendication 5, **caractérisé en ce que** la couche de barrière (14 ; 24, 26) est appliquée comme revêtement sur le support de résistance (12 ; 22).

7. Compensateur en matière souple selon la revendication 6, **caractérisé en ce que** le revêtement sur le support de résistance (12 ; 22) est vulcanisé.

8. Compensateur en matière souple selon la revendication 6 ou 7, **caractérisé en ce que** le revêtement a une épaisseur comprise entre 0,5 et 2,0 mm, préférentiellement entre 0,7 et 1,5 mm.

9. Compensateur en matière souple selon l'une des revendications précédentes, **caractérisé en ce qu'**une couche de barrière (14 ; 24, 26) est prévue sur la face intérieure ainsi que sur la face extérieure du support de résistance (12 ; 22).

10. Compensateur en matière souple selon l'une des revendications précédentes, **caractérisé en ce que** le support de résistance (12 ; 22) et la ou les couches de barrière (14 ; 24, 26) sont collés ou soudés entre eux.

11. Compensateur en matière souple selon l'une des revendications précédentes, pour l'industrie alimentaire ou pharmaceutique, le compensateur pour les produits alimentaires étant **caractérisé en ce qu'**il est réalisé conformément à la norme 2002/72/CE.

12. Compensateur en matière souple selon l'une des revendications précédentes, pour l'industrie alimentaire ou pharmaceutique, le compensateur étant **caractérisé en ce qu'**il est résistant à la pression conformément à la norme 97/23/CE.
